(19) Europäisches Patentamt
European Patent Office
Office européen des brevets

(11) Publication number: **0 479 526 B1**

(12) **EUROPEAN PATENT SPECIFICATION**

(45) Date of publication of patent specification: **19.07.95**

(51) Int. Cl.[6]: **C08K 5/40**, C08K 5/59, C08L 21/00

(21) Application number: **91308934.8**

(22) Date of filing: **30.09.91**

(54) **Rubber composition.**

(30) Priority: **05.10.90 JP 266628/90**

(43) Date of publication of application:
**08.04.92 Bulletin 92/15**

(45) Publication of the grant of the patent:
**19.07.95 Bulletin 95/29**

(84) Designated Contracting States:
**DE ES FR GB IT LU NL**

(56) References cited:
**US-A- 3 558 739**

(73) Proprietor: **BRIDGESTONE CORPORATION**
**10-1, Kyobashi 1-Chome**
**Chuo-Ku**
**Tokyo 104 (JP)**

(72) Inventor: **Hatakeyama, Kazuya**
**5-5, Ogawahigashi-Cho 3-Chome**
**Kodaira City,**
**Tokyo (JP)**

(74) Representative: **Whalley, Kevin et al**
**MARKS & CLERK,**
**57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 479 526 B1

## Description

The present invention relates to rubber compositions having good scorch stability and good thermoresistant properties.

As methods for improving premature vulcanization or scorching stability of a vulcanizable rubber composition used for rubber articles such as tires, it is well known that N,N′-dithiodimorpholine having the following formula

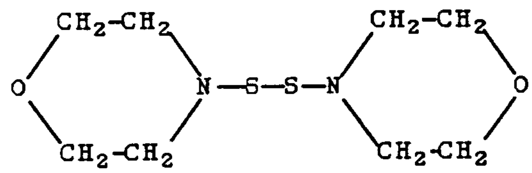

or thiuram compounds such as tetramethylthiuram disulfide having the following structural formula

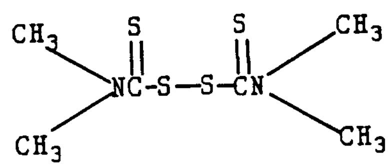

tetraethylthiuram disulfide having diethylamine group or tetrabutylthiuram disulfide having dibutylamine group are compounded in the rubber. Conventional thiuram secondary accelerator compounds are disclosed in US-A-3,558,739. However, rubber compositions containing such compounds mentioned above have not been satisfactory with respect to both premature vulcanization or scorching stability and thermoresistant property.

The present invention aims to provide a rubber composition having improved scorching stability and thermoresistant properties.

The present inventor has conducted various studies in order to solve the aforementioned problems, and as a result the present invention has been accomplished.

The present invention provides a rubber composition comprising:

(a) 100 parts by weight of at least one rubber selected from natural rubber, synthetic rubber and a blend thereof;

(b) from about 0.1 to 15 parts by weight of at least one thiuram compound selected from compounds represented by formulae (I) and (II):

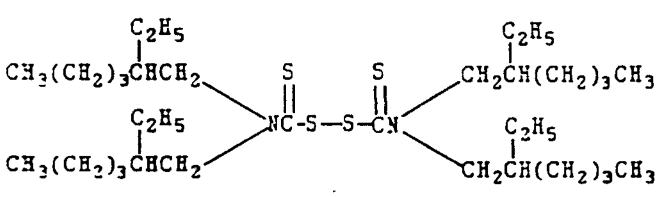

(I)

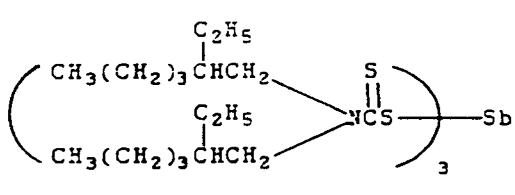

(II)

and

(c) from about 0.1 to 8.0 parts by weight of sulfur.

The thiuram compounds used in the present invention have been not known as rubber compounding agents such as vulcanizers, vulcanization accelerators and stabilizers, and are novel rubber compounding agents.

The rubber component used in the invention can include any known rubbers that are sulphur-vulcanizable, and include natural rubber, styrene/butadiene copolymer rubber, polyisoprene rubber, nitrile rubber, chloroprene rubber, isoprene/isobutylene copolymer rubber, ethylene/propylene/diene terpolymer rubber and the like or blends thereof. Among them, natural rubber and styrene/butadiene copolymer rubber are preferable.

According to the invention, the amount of the thiuram compound of the formula (I) or (II) added is at least 0.1 part by weight per 100 parts by weight of rubber, with 0.3-5.0 parts being preferred, and 1.0-2.0 parts most preferred, per 100 parts by weight of rubber.

If the amount of the thiuram compound is less than about 0.1 part by weight, sufficient effects as a vulcanization accelerator cannot be obtained, while when the amount is excess of 15 parts by weight, no additional effect results.

Further, sulfur is compounded in amount of about 0.1 to 8 parts, preferably 0.2 to 3.0 parts, and most preferably 1.0-3.0 parts, per 100 parts by weight of rubber.

The thiuram compound by the present invention is compounded together with sulfur, and other conventional additives used in the rubber industry, such as accelerator activators, vulcanization accelerators, reinforcing fillers, softeners, plasticizers, age resistant agents, processing agents and the like may also be compounded within the usual compounding ranges, in addition to the thiuram compound and sulfur required in the present invention.

When producing the rubber compounding rubber, the thiuram compound by the present invention may be mixed with the other compounding agent, or may be mixed after the other compounding agent is compounded with the rubber.

According to the present invention, rubber compositions having both excellent scorching stability and thermoresistant property can be obtained. Such rubber compositions are applicable in industrial articles such as tires, belts, hoses, rubber vibration isolators, or the like. Particularly, they are most suitable for the tread of a high speed running passenger tire.

The present invention will now be further described with reference to the following illustrative examples.

Unless otherwise indicated, all parts, percents and ratios are by weight.

Examples 1-3, and Comparative Examples 1-3

Thiuram compounds according to the present invention, sulfur and other conventional compounding agents were compounded with styrene-butadiene copolymer rubber. Thus obtained rubber compositions were vulcanized and at the same time, for comparison, rubber compositions compounded with or without tetramethyl thiuram disulfide instead of the thiuram compound according to the present invention were prepared.

Additionally, rubber compositions compounded with less sulfur than is conventionally used and with more accelerator than is conventionally used, were vulcanized at the same time.

In the examples, the evaluation methods of the vulcanizing property and blow-out test were as follows:

(1) Vulcanizing property

Vulcanizing properties were evaluated by measuring $T_2$ and $T_{90}$ and RMH during vulcanization by means of a rheometer apparatus (oscillating disc type) made by Japan Synthetic Rubber Company. RMH refers to maximum torque value corresponding to cross-linking density or modulus of the rubber compound. $T_2$ refers to the time to reach 2% up from the minimum torque or the bottom of the rheometer curve when the maximum torque is denoted as 100%. The larger the $T_2$ value, the better the scorching stability.

(2) Blow-out property

A test piece was made from the vulcanized rubber compound and its blow-out properties were evaluated according to the method of ASTMD-623-58 by means of a Goodrich type flexometer, and the temperature was measured when the blow-out occurred.

The results are shown in Table 1. The abbreviations in Table 1 refer to the following .

SBR#1500: styrene-butadiene copolymer rubber made by Japan Synthetic Rubber Co. (trade name)
TT: tetramethylthiuram disulfide
DM: dibenzothiazyl sulfenamide
DPG: 1,3-diphenylguanidine
NS: N-butyl-2-benzothiazolyl sulfenamide
EHT: tetra-2-ethylhexylthiuram disulfide
EHT•Sb: di-2-ethylhexyl dithiocarbamic acid antimonate

**Table 1**

| | | Example | | | Comparative Example | | |
|---|---|---|---|---|---|---|---|
| | | 1 | 2 | 3 | 1 | 2 | 3 |
| SBR#1500 (parts) | | 100 | 100 | 100 | 100 | 100 | 100 |
| Aromatic oil | | 37.5 | 37.5 | 37.5 | 37.5 | 37.5 | 37.5 |
| ISAF carbon black | | 60 | 60 | 60 | 60 | 60 | 60 |
| Stearic acid | | 1 | 1 | 1 | 1 | 1 | 1 |
| Zinc oxide | | 3 | 3 | 3 | 3 | 3 | 3 |
| EHT | | 1.5 | 3 | - | - | - | - |
| EHT·Sb | | - | - | 1.5 | - | - | - |
| TT | | - | - | - | 0.5 | - | - |
| DM | | 0.5 | - | 0.5 | 0.5 | 0.5 | 3 |
| DPG | | 0.5 | - | 0.5 | 0.5 | 0.5 | 3 |
| NS | | - | - | - | - | 0.5 | - |
| S | | 1.5 | 1.5 | 1.5 | 1.5 | 1.5 | 0.5 |
| Value measured by rheometer | $T_2$ (min) | 4.0 | 5.1 | 3.5 | 2.8 | 4.0 | 2.7 |
| | $T_{90}$ (min) | 12.8 | 16.0 | 12.0 | 9.6 | 13.3 | 9.2 |
| | RMH (kgcm) | 12.2 | 12.5 | 12.3 | 12.8 | 12.1 | 12.3 |
| Temperature of blow-out (°C) | | 230 | 228 | 232 | 220 | 208 | 222 |

As is clear from Examples 1-3, the rubber compositions according to the present invention were surprisingly improved both in scorching stability and blow-out property of the rubber compound.

Therefore, it is seen that the rubber composition according to the present invention can improve remarkably both the scorching stability and thermoresistant property at the same time.

On the contrary, the Comparative Examples 1-3 containing conventional additives cannot improve the scorching stability and thermoresistant property at the same time.

Table 2

| | | Example | | Comparative Example | |
|---|---|---|---|---|---|
| | | 4 | 5 | 4 | 5 |
| Natural rubber (parts) | | 100 | 100 | 100 | 100 |
| HAF carbon black | | 45 | 45 | 45 | 45 |
| Stearic acid | | 2 | 2 | 2 | 2 |
| Zinc oxide | | 5 | 5 | 5 | 5 |
| EHT | | 1.5 | - | - | - |
| EHT·Sb | | - | 1.5 | - | - |
| NS | | - | - | 0.5 | - |
| TT | | - | - | - | 0.5 |
| S | | 2.5 | 2.5 | 2.5 | 2.5 |
| Value measured by rheometer | $T_2$ (min) | 3.0 | 2.6 | 3.7 | scorched during kneading process |
| | $T_{90}$ (min) | 12.0 | 9.8 | 18.0 | |
| | RMH (kgcm) | 10.5 | 11.0 | 10.8 | |
| Temperature of blow-out (°C) | | 234 | 238 | 204 | |

Examples 4 and 5, Comparative Examples 4 and 5

Thiuram compounds by the present invention and sulfur and other conventional compounding agent were compounded with natural rubber in the amounts specified in Table 2. The thus obtained rubber compositions were vulcanized.

For comparison, a rubber compounded with tetramethyl thiuramdisulfide (TT) instead of the thiuram compound according to the present invention, and a rubber compounded with conventional accelerators and sulfur were compounded and vulcanized at the same time.

Testing of the rubber compositions was carried out in the same manner as Examples 1 to 3 to obtain the results shown in Table 2.

The sample for the blow-out test was taken from the vulcanized rubber.

As is clear from Examples 4 and 5, the vulcanized rubber compositions obtained by compounding specific thiuram compound and sulfur according to the present invention were excellent in scorching stability and had high cross-linking density, and provide very useful rubber composition suitable for industrial materials.

Further, Examples 4 and 5 show that the rubber compositions had a high temperature in the blow-out test and improved heat resistance.

On the contrary, in Comparative Examples 4 and 5 compounded with conventional additives, scorching stability and heat resistance were not improved at the same time.

Particularly, in case of using tetramethylthiuram disulfide (TT), the rubber composition was scorched while kneading it, and no useful compound was obtained.

Accordingly, the rubber compositions according to the present invention are very effective for improving both scorching stability and thermoresistance properties, and are very useful for industrial articles, particularly for the tread rubber composition of a tire.

While the invention has been described in detail and with reference to specific embodiments thereof, it will be apparent to one skilled in the art that various changes and modifications can be made therein without departing from the spirit and scope thereof.

## Claims

1. A rubber composition comprising:
   (a) 100 parts by weight of at least one rubber selected from natural rubber, synthetic rubber and blends thereof;
   (b) from about 0.1 to 15 parts by weight of at least one thiuram compound selected from compounds represented by formulae (I) and (II):

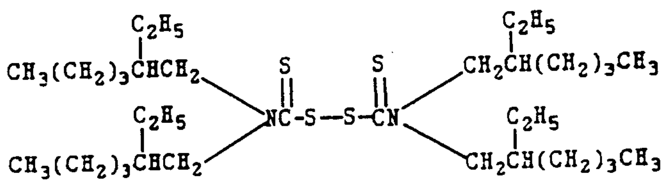

(I)

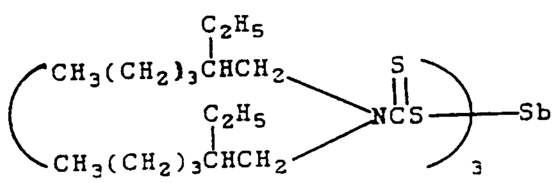

(II)

   and
   (c) from about 0.1 to 8.0 parts by weight of sulfur.

2. A rubber composition as claimed in claim 1, characterized in that said composition comprises said thiuram compound represented by formula (I).

3. A rubber composition as claimed in claim 1, characterized in that said composition comprises said thiuram compound represented by formula (II).

4. A rubber composition as claimed in any of claims 1 to 3, characterized in that said rubber comprises natural rubber.

5. A rubber composition as claimed in any of claims 1 to 3, characterized in that said rubber comprises styrene/butadiene copolymer rubber.

6. A rubber composition as claimed in any of claims 1 to 5, characterized in that said composition comprises from about 0.3 to 5.0 parts by weight of said thiuram compound per 100 parts by weight of rubber.

7. A rubber composition as claimed in claim 6, characterized in that said composition comprises from about 1.0 to 2.0 parts by weight of said thiuram compound per 100 parts by weight of rubber.

8. A rubber composition as claimed in any of claims 1 to 7, characterized in that said composition comprises from about 0.2 to 3.0 parts by weight of sulfur per 100 parts by weight of rubber.

9. A rubber composition as claimed in claim 8, characterized in that said composition comprises from about 1.0 to 3.0 parts by weight of sulfur per 100 parts by weight of rubber.

## Patentansprüche

1. Kautschukzusammensetzung, umfassend:
(a) 100 Gewichtsteile mindestens einer Kautschuksubstanz, ausgewählt aus Naturkautschuk, synthetischen Kautschuk und Blend davon;
(b) von etwa 0,1 bis 15 Gewichtsteile mindestens einer Thiuram-Verbindung, ausgwählt aus Verbindungen, dargestellt durch Formel (I) und (II):

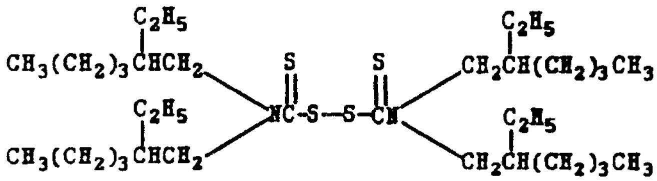

(I)

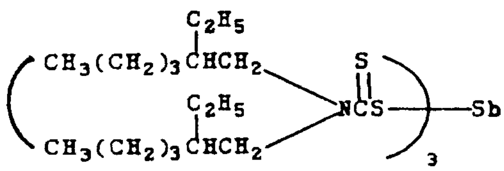

(II)

und
(c) von etwa 0,1 bis 8,0 Gewichtsteile Schwefel.

2. Kautschukzusammensetzung nach Anspruch 1, dadurch gekennzeichnet, daß die Zusammensetzung die durch Formel (I) dargestellte Thiuram-Verbindung aufweist.

3. Kautschukzusammensetzung nach Anspruch 1, dadurch gekennzeichnet, daß die Zusammensetzung die durch Formel (II) dargestellte Thiuram-Verbindung aufweist.

4. Kautschukzusammensetzung nach Anspruch 1 bis 3, dadurch gekennzeichnet, daß der Kautschuk Naturkautschuk aufweist.

5. Kautschukzusammensetzung nach Anspruch 1 bis 3, dadurch gekennzeichnet, daß der Kautschuk einen Kautschuk-Copolymer aus Styrol-Butadien aufweist.

6. Kautschukzusammensetzung nach Anspruch 1 bis 5, dadurch gekennzeichnet, daß die Zusammensetzung von etwa 0,3 bis 5,0 Gewichtsteile der Thiuram-Verbindung pro 100 Gewichtsteile Kautschuk aufweist.

7. Kautschukzusammensetzung nach Anspruch 6, dadurch gekennzeichnet, daß die Zusammensetzung von etwa 1,0 bis 2,0 Gewichtsteile der Thiuram-Verbindung pro 100 Gewichtsteile Kautschuk aufweist.

8. Kautschukzusammensetzung nach Anspruch 1 bis 7, dadurch gekennzeichnet, daß die Zusammensetzung von etwa 0,2 bis 3,0 Gewichtsteile Schwefel pro 100 Gewichtsteile Kautschuk aufweist.

9. Kautschukzusammensetzung nach Anspruch 8, dadurch gekennzeichnet, daß die Zusammensetzung von etwa 1,0 bis 3,0 Gewichtsteile Schwefel pro 100 Gewichtsteile Kautschuk aufweist.

## Revendications

1. Composition de caoutchouc comprenant:
(a) 100 parties en poids d'au moins un caoutchouc choisi parmi le caoutchouc naturel, le caoutchouc synthétique et leurs mélanges;

(b) de 0,1 à 15 parties en poids d'au moins un composé thiurame choisi parmi les composés de formule (I) et (II):

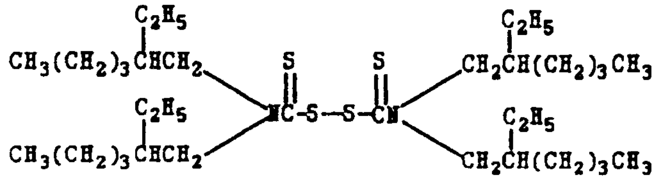

(I)

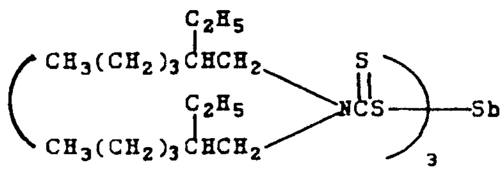

(II)

et

(c) d'environ 0,1 à 8,0 parties en poids de soufre.

**2.** Composition de caoutchouc selon la revendication 1, caractérisé en ce que ladite composition comprend ledit composé thiurame représenté par la formule (I).

**3.** Composition de caoutchouc selon la revendication 1, caractérisé en ce que ladite composition comprend ledit composé thiurame représenté par la formule (II).

**4.** Composition de caoutchouc selon l'une quelconque des revendications 1 à 3, caractérisé en ce que ledit caoutchouc comprend du caoutchouc naturel.

**5.** Composition de caoutchouc selon l'une quelconque des revendications 1 à 3, caractérisé en ce que ledit caoutchouc comprend un caoutchouc de copolymère styrène-butadiène.

**6.** Composition de caoutchouc selon l'une quelconque des revendications 1 à 5, caractérisé en ce que ladite composition comprend d'environ 0,3 à 0,5 parties en poids dudit composé thiurame par 100 parties en poids de caoutchouc.

**7.** Composition de caoutchouc selon la revendication 6, caractérisé en ce que ladite composition comprend d'environ 1,0 à 2,0 parties en poids dudit composé thiurame par 100 parties en poids de caoutchouc.

**8.** Composition de caoutchouc selon l'une quelconque des revendications 1 à 7, caractérisé en ce que ladite composition comprend d'environ 0,2 à 3,0 parties en poids de soufre par 100 parties en poids de caoutchouc.

**9.** Composition de caoutchouc selon la revendication 8, caractérisé en ce que ladite composition comprend d'environ 1,0 à 3,0 parties en poids de soufre par 100 parties en poids de caoutchouc.